(19) Europäisches Patentamt
European Patent Office
Office européen des brevets

(11) **EP 3 633 708 B1**

(12) **EUROPEAN PATENT SPECIFICATION**

(45) Date of publication and mention
of the grant of the patent:
**05.10.2022 Bulletin 2022/40**

(21) Application number: **17912067.0**

(22) Date of filing: **31.05.2017**

(51) International Patent Classification (IPC):
*H01H 85/05* (2006.01)   *C01B 13/11* (2006.01)
*H01H 23/00* (2006.01)   *H01H 85/00* (2006.01)
*H01H 85/48* (2006.01)

(52) Cooperative Patent Classification (CPC):
**H01H 85/0017; C01B 13/11; H01H 23/00;
H01H 85/05; H01H 85/48; H05H 1/2406;**
H01H 85/0026; H01H 85/20; H01T 19/00

(86) International application number:
**PCT/JP2017/020206**

(87) International publication number:
**WO 2018/220735 (06.12.2018 Gazette 2018/49)**

(54) **OZONE GENERATION DEVICE**

OZONGENERATOR

DISPOSITIF DE GÉNÉRATION D'OZONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.04.2020 Bulletin 2020/15**

(73) Proprietor: **Mitsubishi Electric Corporation
Chiyoda-ku
Tokyo 100-8310 (JP)**

(72) Inventors:
 • **NAKATANI, Hajime
 Tokyo 100-8310 (JP)**
 • **NAGAYAMA, Takahisa
 Tokyo 100-8310 (JP)**
 • **TAKAUCHI, Daisuke
 Tokyo 100-8310 (JP)**

 • **ODAI, Yoshiaki
 Tokyo 100-8310 (JP)**

(74) Representative: **Witte, Weller & Partner
Patentanwälte mbB
Postfach 10 54 62
70047 Stuttgart (DE)**

(56) References cited:
EP-A2- 0 621 621      WO-A1-2015/183805
WO-A1-2016/084181    FR-A1- 2 092 811
FR-A1- 2 092 811     GB-A- 954 513
JP-A- H11 353 993    JP-A- H11 353 993
JP-A- 2009 252 541   JP-A- 2010 269 949
JP-A- 2011 243 484   JP-A- 2011 243 484
JP-A- 2016 162 522   JP-U- S5 792 732
US-A- 2 471 176      US-A1- 2010 296 980

## Description

Technical Field

This invention relates to an ozone generation device which ozonizes an oxygen-containing gas by discharging, especially relates to a current blocking element which is provided for protecting operation.

Background Art

Regarding large-capacity ozone generation device, as a load which is connected to a power source, more than 100 discharge tubes are used. Even in a case where a short circuit discharge is generated in one discharge tube due to variation of discharge tubes in the above mentioned ozone generation device, in order to make it possible to continue operation of whole of device by cutting only the discharge tube from a power source, an ozone generation device in which a fuse is provided at each discharge tube is proposed. (For example, refer to Patent Document 1)

While a device is operated, when a dielectric tube which constitutes a discharge tube is broken down, a hole is generated in the dielectric tube and an arc discharge is generated between a high voltage electrode and a ground metal electrode through the hole, as a result, a large short circuit current flows between the high voltage electrode and the ground metal electrode. In some cases, when a short circuit current continues flowing, a hole is generated in a ground metal electrode and cooling water may be leaked out. In order to avoid continuation of the short circuit current, in Patent Document 1, at an inlet of a high voltage electrode, a fuse is attached, and when a large short circuit current flows, a fuse cuts off the large current and a discharge tube which is broken down is cut off from a power source. Power is supplied to discharge tubes other than the discharge tube which is broken down, discharge is generated and ozone generation can be continued. In an ozone generation device disclosed in Patent Document 1, in a power supplying part inside a dielectric tube which is made of glass, a fuse is provided being away from a glass tube.

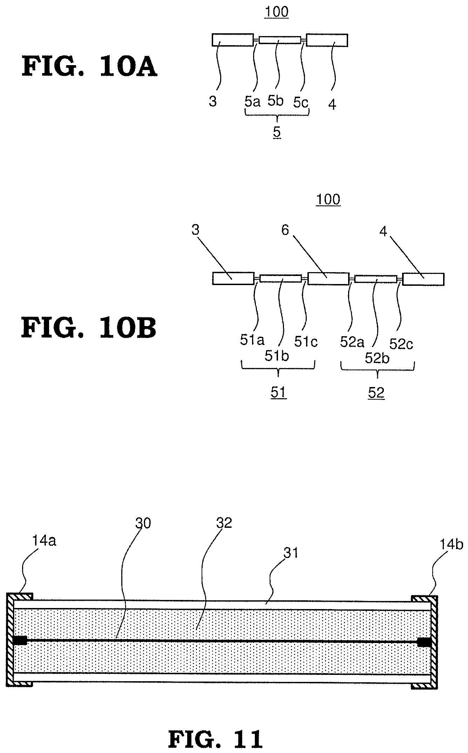

FIG.11 is a cross-sectional view showing the general configuration of a fuse which is used for a high voltage. In a ceramic tube 31, a fuse element 30 is inserted and both ends of the fuse element 30 is electrically connected and fixed to caps 14a and 14b which are provided at both ends of the ceramic tube 31. When a large short circuit current flows, the fuse element 30 is melted and evaporated, and as a result, an arc discharge is generated in a path where a large short circuit current flows. In order to forcibly eliminate an arc discharge, silica sand 32 is filled around a fuse element, heat of an arc is absorbed by silica sand, and an arc plasma density is thinned. Consequently, by increasing a voltage which is applied between caps, an arc is extinguished. When an arc is extinguished, a high voltage is applied to both ends of a fuse, however, a distance between the caps 14a and 14b is secured enough, insulation can be kept against a high voltage, therefore, a current will not flow in a fuse again. As above mentioned, an electrode which is broken down will be electrically cut off from a power source by a fuse.

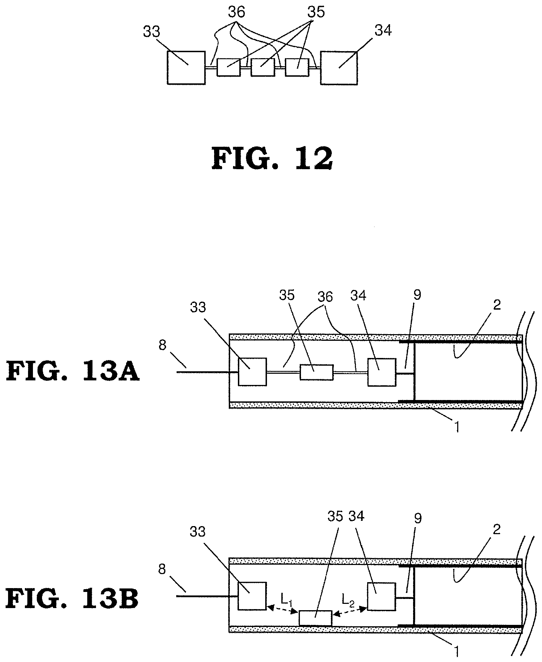

In Patent Document 2, an ozone generation device according to the preamble of claim 1, which comprises a current blocking element, which is used instead of general fuses, is proposed. FIG.12 shows an example of a current blocking element which is disclosed by Patent Document 2. Between three fuse connecting plates 35 and electrodes 33, 34 which are provided at both ends thereof, four fuse conductors 36 are electrically connected so as to constitute a current blocking element. A fuse conductor generates heat due to a current which flows during normal operation, at both ends of the fuse conductor 36, a fuse connecting plate 35 having enough surface area which can be cooled is connected, generated heat in the fuse conductor 36 is released from the fuse cooling plate 35 to surrounding gas atmosphere, and increase of temperature of the fuse conductor 36 is suppressed. When a large short circuit current flows, the four fuse conductors 36 will be melted, therefore the three fuse connecting plates 35 will be dropped. In a case of the above mentioned configuration, unlike the fuse shown in FIG.11, silica sand is not filled around the fuse conductor, therefore, in a case where a fuse is used at a high voltage or in a case where a short circuit current which is higher than 10A flows, it is difficult to eliminate an arc discharge. Therefore, by detecting the drop of voltage of a power source or increase of current when a dielectric tube is broken down, breakdown of a dielectric tube is detected, and by decreasing or stopping output of a power source, an arc is extinguished. After an arc is extinguished, between the electrodes 33 and 34, an insulation distance which is sufficiently large can be secured, therefore an electrode which is broken down can be electrically cut off. A current blocking element which is disclosed by Patent Document 2 is provided inside a dielectric tube (glass tube) being away from a glass tube. Further, when a stainless material is used as a material of a fuse conductor, a current blocking element can be configured to be stable even in high oxidation atmosphere in an ozone generation device.

Patent document 3, according to its abstract, states that, to provide a terminal block which can breaks a circuit by heat generation when a highfrequency current flows through it, this terminal block comprises a first terminal made of a conductor, a second terminal made of a conductor, and a connecting part 4 which forms a current path between these terminals. The connecting part comprises metal pieces and fusing bodies disposed between these metal pieces. The fusing bodies can be fused by ambient heat so as to break the current path between the first terminal and the second terminal. The metal piece is provided with a weight which urges the metal piece in a direction perpendicular to the metal piece. Thereby, if, for example, the first terminal loosens, the first terminal and the metal piece generate heat. As a result, the fusing body is fused so that the metal piece falls downward under the weight of the weight. Accordingly, the current path between the first terminal and the second terminal is broken, so that influence of the heat generation on peripheral equipment is prevented after that time.

Patent document 4, according to its abstract, relates to a high voltage power fuse having a dramatically reduced size facilitated by silicated filler material, a formed fuse element geometry, arc barrier materials and single piece terminal fabrications. Methods of manufacture are also disclosed.

Patent document 5, according to its abstract, states that a fuse includes an insulative housing made from two housing pieces of thermoplastic material, terminals extending through slots in the ends of the housing, and a fusible element having ends connected to both of the terminals. The housing includes a tubular portion and slotted end portions located at the two ends of the tubular portion.

Patent document 6, according to its abstract, states that, to provide a current interrupting element with which it becomes possible to prevent breakage of the whole of a device even when a part of the device is broken due to dielectric breakdown allowing an abnormal current to flow, in a current interrupting element, where a fuse conductor which is fused/evaporated by an abnormal current exceeding a rated current, is connected between two electrodes, a length of the fuse conductor is set so that when the fuse conductor does not exist, an electric field strength is obtained at which a dielectric breakdown occurs between the electrodes and due to a voltage applied between the electrodes and, and a size of the fuse conductor is set so that when a predetermined abnormal current flows to the fuse conductor, the fuse conductor evaporates within a predetermined period of time.

Prior Art Document

Patent Document

Patent Document 1 : International publication 2016/No. 084181
Patent Document 2 : JP 2011-243484A
Patent Document 3 : JP H11 353993 A
Patent Document 4 : WO 2015/183805 A1
Patent Document 5 : EP 0 621 621 A2
Patent Document 6 : JP 2011 243484 A

Summary of the Invention

Problems to be Solved by the Invention

In conventional ozone generation devices, in a case where a fuse shown in FIG.11 is used, a size of a fuse is large. A typical voltage which is applied to an ozone generation device is 3 to 7kV, and a current is 0.2 to 1A. A voltage is high, therefore it is necessary to apply a fuse for power, regarding a size of a fuse, an outer diameter is 20 to 40mm and a length is 110 to 200mm, that is, there is a problems such that a size of a fuse is large. On the other hand, when an outer diameter of a glass tube is small, loading density of glass tubes in a body container of an ozone generation device can be made large, therefore, a size of a body container of an ozone generation device which generate the same amount of ozone can be made small. Consequently, from a view point of cost reduction, it is required to reduce a size of a diameter of a glass tube in order to reduce a size of a body container of an ozone generation device. However, in a case where a fuse is used, an outer diameter of a fuse is large, therefore, an outer diameter of a glass tube can not be made small, glass tube loading density in a body container of an ozone generation device can not be increased, as a result, there is a problems such that cost can not be reduced by reducing a size of a body container of an ozone generation devise.

Further, in a case where a current blocking element which is shown in FIG.12 and is disclosed by Patent Document 2 is used, in order to efficiently dissipate generated heat in a fuse conductor to surrounding atmosphere gas, it is necessary to enlarge an area of the fuse connecting plate 35. When an area of a fuse connecting plate is enlarged, the weight of the fuse connecting plate becomes heavier, and force is applied to a thin fuse conductor. Therefore, there is a problems such that due to vibration when a device is transported, a fuse conductor is easy to be disconnected. Further, there is a problem such that increase of temperature or cooling of a fuse conductor is repeated due to an operation of ON/OFF operation of a device, thermal stress is applied to a fuse conductor, and together with mechanical stress which is regularly applied to a thin fuse conductor by a fuse connecting plate, a fuse conductor is easy to be broken and a lifetime of a current blocking element is short. Further, in a case where a high voltage is applied to an electrode such as an ozone generation device, in order to secure an insulation distance after a current blocking element is melted, it is necessary to increase a length of a fuse conductor, as a result, there is a problem such that an amount of heat which is generated in a fuse conductor due to an electric current while normal operation is large, a temperature of a fuse conductor is increased and as a result, a lifetime of a current blocking element is short.

When a lifetime of a current blocking element is short, the number of discharge tubes which can be operated in an ozone generation device is decreased, and as a result, an amount of ozone generation will be decreased. While decrease of an amount of ozone generation is small, an amount of ozone generation will be increased by increasing power which is applied from a power source to a discharge tube, however, when there is no margin of power in a power source, a rated amount of ozone generation can not be generated, therefore, in this case, it is necessary to perform open inspection of a body of an ozone generation device and replace an electrode tube. As above mentioned, when a lifetime of a current blocking element is short, there is a problem such that a period of open inspection of a generation device becomes short, and as a result, maintenance cost will be increased.

This invention is made so as to solve the above mentioned problems, and aims to provide an ozone generation device having a highly reliable current blocking element in which a thin discharge tube can be used and which can reduce a size of an ozone generation device.

Means for Solving Problems

Therefore, there is provided an ozone generation device according to claim 1.

Any examples and embodiments of the present disclosure not falling under the scope of the appended claims are provided for illustrative purposes, only.

Effects of Invention

This invention can provide an ozone generation device having a current blocking element by which breakdown of a fuse conductor due to mechanical stress can be suppressed, and in which a thin discharge tube can be used.

Brief Description of Drawings

FIG.1 is a cross-sectional view showing a schematic configuration of an ozone generation device in Embodiment 1 of this disclosure.

FIG.2A and FIG.2B are enlarged cross-sectional views showing a principal part of a dielectric tube at which a current blocking element is provided of an ozone generation device in Embodiment 1 of this disclosure.

FIG.3 is a diagram for describing an operation of an ozone generation device in Embodiment 1 of this disclosure.

FIG.4 is a cross-sectional view showing a state in which a fuse conductor of a current blocking element which is provided at an ozone generation device in Embodiment 1 of this disclosure is melted and extinguished.

FIG.5 is an enlarged cross-sectional view showing a principal part of a dielectric tube, at which a current blocking element is provided, in an ozone generation device in Embodiment 2 of this disclosure.

FIG.6A and FIG.6B are cross-sectional views showing a state in which a fuse conductor of a current blocking element which is provided at an ozone generation device in Embodiment 2 of this disclosure is melted and extinguished.

FIG.7 is an enlarged cross-sectional view showing a principal part of a dielectric tube, at which a current blocking element is provided, in an ozone generation device in Embodiment 3 of this disclosure .

FIG.8 is an enlarged cross-sectional view showing a configuration of a current blocking element which is provided at an ozone generation device in an Embodiment 4, which is not covered by the claimed invention.

FIG.9 is an enlarged cross-sectional view showing a configuration of a current blocking element which is provided at an ozone generation device in an Embodiment 5, which is not covered by the claimed invention.

FIG.10A and FIG.10B are plan views showing configuration members of a current blocking element in Embodiment 6 of this disclosure.

FIG.11 is a cross-sectional view showing a configuration of a conventional fuse.

FIG.12 is a diagram showing one example of a configuration of a current blocking element disclosed by Patent Document 2.

FIG.13A and FIG.13B are cross-sectional views for describing an operation of a current blocking element which is disclosed by Patent Document 2. Embodiments for Carrying Out the Invention

Embodiment 1

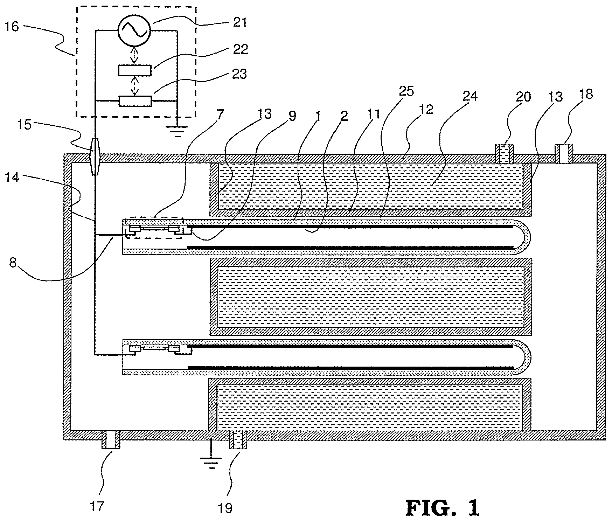

FIG.1 is a cross-sectional view showing the schematic configuration of an ozone generation device in Embodiment 1 of this disclosure. In FIG.1, in a body container of an ozone generation device 12, a pair of a cylindrical shaped dielectric tube 1 and a ground metal electrode 11 constitute one discharge tube. In FIG.1, in order to describe the details of a discharge tube, only two discharge tubes are shown, however, in a large-capacity ozone generation device, in one body container of a ozone generation device 12, several hundred discharge tubes are provided. For example, the dielectric tube 1 is comprised of a cylindrical shaped glass tube, the ground metal electrode 11 is comprised of a pipe which is made of stainless, via a spacer which is not shown in FIG., the dielectric tube 1 and the ground metal electrode 11 are disposed concentrically, and between the dielectric tube 1 and the ground metal electrode 11, a narrow discharge gap 25 is formed. One end (right end) of the dielectric tube 1 is closed and other end (left end) of the dielectric tube 1 is opened. In the dielectric tube 1, a voltage applying electrode 2 is disposed. Here, the voltage applying electrode 2 is comprised of a metal film which is formed by evaporating in an inner surface of the dielectric tube 1. The dielectric tube 1 having the voltage applying electrode 2 which is formed on an inner surface thereof and the ground metal electrode 11 constitute a discharge tube. The voltage applying electrode 2 is connected to an output end of an AC voltage generation part 21 in an AC power source 16 via an electrical connecting member 9, a current blocking element 7, a power supplying member 8 and a power supplying lead wire 14. Other end of the AC voltage generation part 21 is grounded, and the body container of the ozone generation device 12 is also grounded. A part where the power supplying lead wire 14 is penetrated into the body container of the ozone generation device 12 which is ground potential is insulated by a bushing 15. An AC voltage which is generated by the AC voltage generation part 21 of the AC power source 16 is a high voltage which is high enough to generate a discharge in the discharge gap 25, and frequency of an AC is frequency which can generate discharge via a dielectric, that is, which can generate silent discharge. The AC voltage generation part 21 generates high frequency AC voltage, for example, voltage is 3 to 7kV and frequency is 0.5 to 5 kHz.

Here, an example of a metal film which is formed in an inner surface of a dielectric as a voltage applying electrode will be described, however, it is not necessary for a voltage applying electrode to be a metal film which is formed on an inner surface, and any metal body which is disposed in the dielectric tube 1 is acceptable. A configuration in which a voltage is applied between the voltage applying electrode and the ground metal electrode 11 via a dielectric body, in which at any position between a voltage applying electrode and a ground electrode, a discharge gap is formed and in which in the discharge gap, so-called silent discharge is generated is acceptable.

In the AC power source 16, a power source control part 22 and an output voltage drop detection part 23 are provided. In Embodiment 1, the output voltage drop detection part 23 is connected between the supplying power lead wire 14 and the ground, and based on a signal of the output voltage drop detection 23, decrease of an output voltage will be detected and the detected signal will be transmitted to the power source control part 22. The power source control part 22 performs controlling of operation or stop of a device and performs monitoring control of an AC power source. The body container of the ozone generation device 12 and the AC power source 16 constitute an ozone generation device.

The pipe-shaped ground metal electrode 11 which is made of stainless is connected to end plates 13 which are provided at both ends thereof by welding, etc., and the end plates 13 are connected to the body container of the ozone generation device 12 by welding, etc. The body container of the ozone generation device 12 is divided into three rooms by the end plates 13, and the rooms which are positioned at left side and right side are gas space and the room which is positioned at center is filled with cooling water 24. It is configured for the cooling water to flow from an inlet of cooling water 19 to an outlet of cooling water 20. Material gas containing oxygen is introduced from an inlet of material gas 17, and while the material gas passed through a discharge gap 25, gas is ozonized by discharging and is exhausted from an outlet of gas containing ozone 18, and is utilized for ozone treatment, etc.

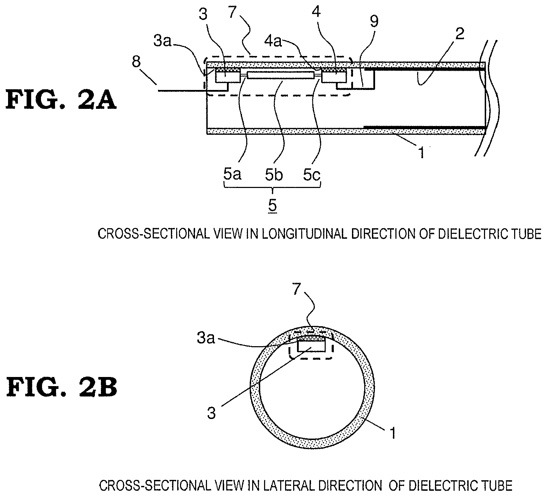

FIG.2A and FIG.2B are enlarged cross-sectional views showing a configuration of a current blocking element 7, FIG.2A is a cross-sectional view in the longitudinal direction of the dielectric tube 1 at a side of a supplying power part and FIG.2B is a cross-sectional view in the lateral direction thereof. At both ends of an intermediate conductor 5b, a fuse conductor 5a and a fuse conductor 5c are connected, and the fuse conductor 5a, the intermediate conductor 5b and the fuse conductor 5c constitute a fusing element 5. At a side of the fuse conductor 5a which is opposite to a side where the intermediate conductor 5b is connected, a fixed electrode 3 at a side of supplying power is connected. Further, at a side of the fuse conductor 5c which is opposite to a side where the intermediate conductor 5b is connected, a fixed electrode 4 at a side of voltage applying electrode is connected. The fixed electrode 3 at a side of supplying power and the fixed electrode 4 at a side of voltage applying electrode are plate-shaped. As it will be described later, a thickness of the plate may be that of a thin foil, for example, 0.02mm. A surface of the plate of the fixed electrode 3 at a side of supplying power is fixed to an inner surface of the dielectric tube 1 by a fixing material 3a and a surface of the plate of the fixed electrode 4 at a side of supplying power is fixed to an inner surface of the dielectric tube 1 by a fixing material 4a, individually. The fixing material 3a and the fixing material 4a are constituted by an adhesive having excellent thermal conductivity, an epoxy-based high thermal conductive adhesive, a conductive adhesive, an inorganic-based adhesive, etc. To the fixed electrode 4 at a side of voltage applying electrode, an electrical connecting member 9 is connected, and to the fixed electrode 3 at a side of supplying power, a power supplying member 8 is connected, individually. In Embodiment 1, the dielectric tube 1 is provided in a horizontal direction, and as shown in FIG.2B, the current blocking element 7 is provided at an upper side of inside of the dielectric tube 1.

As above mentioned, the current blocking element 7 comprises a fusing element 5 in which the fuse conductor 5a and the fuse conductor 5c are connected to both sides of the intermediate conductor 5b, the plate-shaped fixed electrode 3 which is connected at a side of the fuse conductor 5a which is opposite to a side where the intermediate conductor 5b is connected, and the plate-shaped fixed electrode 4 which is connected at a side of the fuse conductor 5c which is opposite to a side where the intermediate conductor 5b is connected, and a plate surface of each fixed electrode is fixed to an inner surface of the dielectric tube 1 by fixing materials. A part of the dielectric tube 1 which constitutes the current blocking element 7 also refers to as a base. Further, a size of a fixed electrode, an intermediate conductor, a fuse conductor and a fixing material shown in FIG.2A and FIG.2B is shown differently from that of actual size ratio against other member of each section, and in order to make the arrangement of each member understandable, in FIG., it is shown such that a size is enlarged, or each member is emphasized.

Next, an operation will be described. When a power source control part 22 of an AC power source 16 transmits an operation command to an AC voltage generation part 21, a high frequency AC voltage which is outputted from the AC voltage generation part 21 is applied to a voltage applying electrode 2 through a power supplying lead wire 14, the power supplying member 8, the current blocking element 7 and the electrical connecting member 9. When a high frequency AC voltage is applied to narrow discharge gap 25 which is formed between the voltage applying electrode 2 and the ground metal electrode 11, in the discharge gap 25, discharge is generated. In many cases, a size of the discharge gap is set to be less than 0.6 mm. When a gas containing oxygen is introduced from the inlet of material gas 17, the gas passes through the discharge gap 25, the gas is ozonized by an action of discharge so as to be introduced outside from an outlet of gas containing ozone 18. A material gas component is dry air or an oxygen gas to which very small amount of nitrogen gas is added. It is necessary for a material gas to contain oxygen at least. A temperature of the voltage applying electrode 2 and the ground metal electrode 11 are increased due to heat which is generated by discharge, therefore cooling water 24 is flown through an inlet of cooling water 19 and an outlet of cooling water 20 to perform cooling.

In a case where the dielectric tube 1 is broken down and a hole is generated, a part between the voltage applying electrode 2 and the ground metal electrode 11 becomes conductive state. As a result, an output side of the AC power source 16 becomes short circuit state, and instantly, a large short circuit current passes through a breakdown part of the dielectric tube 1. A large short circuit current flows in the current blocking element 7 which is provided at the dielectric tube 1 which is broken down. The fuse conductor 5a and the fuse conductor 5c which constitute the current blocking element 7 have a small sectional area and a high resistance value, therefore when an over current such as a large short circuit current flows instantly in the part, a temperature of the part is increased suddenly, and the part is melted and evaporated. The fuse conductor which is melted and evaporated becomes a high temperature plasma state, and an arc discharge is generated.

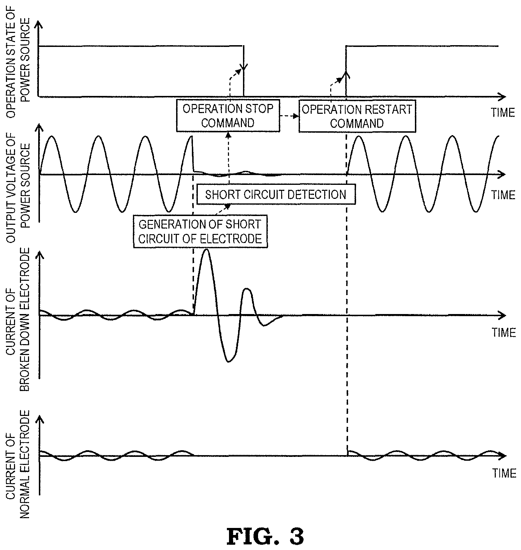

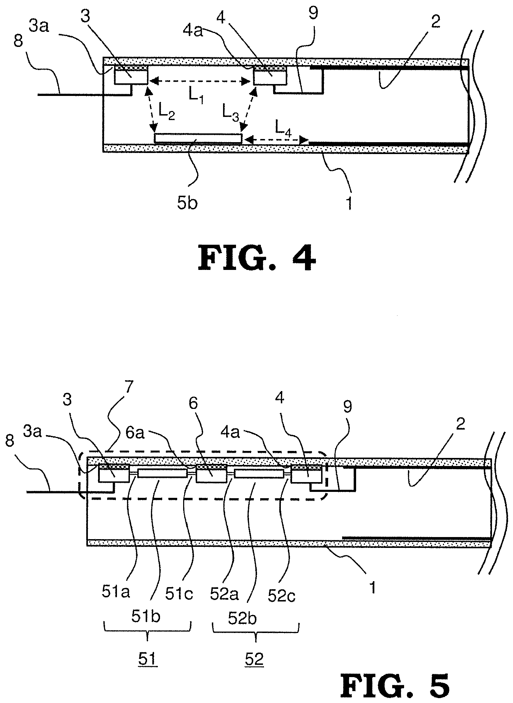

Next, a command value of the power source control part 22 in an operation state or in a breakdown state, waveforms of voltage and current at each part will be shown in FIG.3. When the power source control part 22 transmits an operation command, the AC power source 16 becomes an operation state so as to output a high frequency high voltage. When the dielectric tube 1 is broken down, a load side of the AC power source 16 becomes a short circuit state, therefore, a power source output voltage is dropped to be close to zero and at the same time, a large short circuit current will flow in the dielectric tube 1 which is broken down and the current blocking element 7. On the other hand, a voltage which is applied to a normal electrode is dropped to be close to zero, therefore, a current which flows in a normal electrode is dropped to be close to zero, discharge which is generated in the discharge gap 25 is stopped and generation of ozone is stopped. When an output voltage of the AC power source 16 is dropped to be lower than a predetermined threshold value, an output voltage drop detecting part 23 detects an output voltage drop and transmits the result to the power source control part 22. When an output voltage is dropped to be lower than a predetermined threshold even though the state is power source operation state, the power source control part 22 judges such that a short circuit is generated at a power source output side (short circuit detection) and transmits an operation stop command to the AC voltage generation part 21. As a result, the AC power source 16 stops an output, a power source output voltage is dropped to be zero, and a large short circuit current which flows in an electrode which is broken down is dropped to be zero. An arc discharge which is generated in the fuse conductor 5a and the fuse conductor 5c is extinguished when a large short circuit current is dropped. The fuse conductor 5a and the fuse conductor 5c shown in FIG.2A are extinguished by melting, as a result, the intermediate conductor 5b loses supporting at both ends, and therefore, as shown in FIG.4, the intermediate conductor 5b is dropped to a bottom of inside of the dielectric tube 1. Between the fixed electrode 3 at a power supplying side and the voltage applying electrode 2, an insulation distance shown in FIG.4 is secured.

    (a) An insulation distance between the fixed electrode 3 at a power supplying side and the fixed electrode 4 at a voltage applying electrode side = $L_1$

(b) An insulation distance between the fixed electrode 3 at a power supplying side and the fixed electrode 4 at a voltage applying electrode side via the intermediate conductor 5b = $L_2 + L_3$

(c) An insulation distance between the fixed electrode 3 at a power supplying side and the voltage applying electrode 2 via the intermediate conductor 5b = $L_2 + L_4$

In any of (a), (b) or (c), an insulation distance is sufficiently secured, therefore even when high frequency high voltage is applied to the fixed voltage 3 at a power supplying side again, an arc discharge will not be generated in a part where the above mentioned insulation distance is indicated. Regarding general ozone generation devices, in many cases, an effective value of applying voltage is 7.5kV or lower, further, in many cases, an ozone generation device will be operated in which gas pressure inside the body container of an ozone generation device 12 is 0.07 MPa or higher. In the above mentioned case, when an insulation distance = 7mm or larger, an arc discharge will not be generated when a voltage is applied again. However, when an ozone generation device is used for a long period, an inner surface of the dielectric tube 1 is stained, in some cases, an insulation performance is deteriorated, therefore it is preferable such that an insulation distance is 14mm or larger, that is the twice of the above mentioned distance. Further, in a case where an operation voltage of an ozone generation device is low, for example, in a case of 4kV, by making an insulation distance 4mm or larger, a size of a current blocking element can be reduced further.

After the power source control part 22 transmits an operation stop command, and then as shown in FIG.3, the power source control part 22 transmits an operation restart command to the AC voltage generation part 21, and the AC power source 16 outputs a high frequency high voltage again. A period of time from operation stop command to operation restart command is predetermined. The above mentioned period of time may be set as a period of time which is longer than continuing time of an arc discharge which is generated in the fuse conductor 5a and the fuse conductor 5c. The above mentioned predetermined period of time is for example, 1 to 10 seconds. In an electrode which is broken down, the fuse conductor 5a and the fuse conductor 5c are melted and evaporated, and the intermediate conductor 5b is dropped to a bottom of the dielectric tube 1 and electrically cut off, therefore, a current does not flow. In a normal electrode, a high frequency high voltage is applied, a current flows, a discharge is generated in the discharge gap 25, and generation of ozone is started again. When the number of dielectric tubes 1 which are arranged in the body container of an ozone generation device 12 is indicated as N, an amount of generation of ozone is decreased to roughly [(N-1)/N]. In an ozone generation device having many dielectric tubes, for example, N= several hundreds, an output decrease ratio will be lowered.

As above mentioned, by detecting voltage drop due to breakdown of a dielectric tube 1, stopping the AC power source 16 so as to drop a large short circuit current to be zero, electrically cutting off the dielectric tube 1 which is broken down by the current blocking element 7 and restarting the AC power source 16, an operation of an ozone generation device can be continued. By doing the above mentioned, protection (short circuit protection) in a case where a short circuit is generated at a load side of the AC power source 16 can be performed.

In the above mentioned, as a method for detecting breakdown of a dielectric tube, that is, breakdown of a discharge tube, a case in which a drop of output voltage is detected by measuring by the output voltage drop detection part 23 which is provided in an AC power source is described, however, when breakdown of discharge tube is detected by using other methods, for example, a method for detecting an increase of output current, a method in which a plurality of discharge tubes are divided into two and output of power sources is divided into two so as to apply a current and detect by difference of current value, and a method in which light which is emitted from an arc discharge in a body container of an ozone generation device is measured, breakdown of a discharge tube is detected so as to control an output of the AC power source 16, same effect can be obtained.

Next, heat generation and cooling in the current blocking element 7 in Embodiment 1 will be described. A value of current which flows in the current blocking element 7 in normal operation (value of current per one dielectric tube) is 0.2 to 1A in a case where a typical voltage which is applied to an ozone generation device is 3 to 7 kV. On the other hand, a value of current of over current (short circuit current) when the dielectric tube 1 is broken down depends on an impedance of AC power source, however, a value of current is approximately 10 times to 1000 times of a value of current in operation. A value of resistance between terminals of the current blocking element 7 depends on a size and material of the fuse conductor 5a and the fuse conductor 5c, and when a cross-sectional area is indicated by S, a length is indicated by L and a resistance ratio is indicated by p, a value of resistance of one fuse conductor :R=p x (L/S). In order to make the current blocking element 7 function, it is necessary to increase a temperature which is higher than a temperature by which the fuse conductor 5a and the fuse conductor 5c are melted by a flow of overcurrent. As a short circuit current flows momentarily, Joule heat which is generated in a fuse conductor will not be dissipated to the circumference, and heats the fuse conductors. Consequently, whether a fuse conductor is melted or not is determined by a melting temperature, a specific gravity, a specific heat, a resistance ratio p and a cross-sectional area S which are determined by a material of a fuse conductor.

In Embodiment 1, as a material of the current blocking element 7, stainless steel (SUS304 or SUS316) is used and regarding a cross-sectional size of the fuse conductor 5a and the fuse conductor 5c, a thickness is 0.01 to 0.05mm and a width is 0.05 to 0.30mm. When a length of the fuse conductor 5a and the fuse conductor 5c is shorter, a value of resistance R is smaller and generated heat due to current in operation is smaller, further, when a length is shorter, heat which is generated by current in operation in the fuse conductor 5a and the fuse conductor 5c transmits more easily to the fixed electrode 3 at power supplying side and the fixed electrode 4 at voltage applying electrode side, and a temperature of the fuse conductor is dropped. One of the features in Embodiment 1 is such that by fixing a surface of the fixed electrode 3 and that of the fixed electrode 4 to an inner surface of the dielectric tube 1 via the fixing material 3a and the fixing material 4a, heat which is generated in a fuse conductor in normal operation is radiated from the fixed electrode 3 and the fixed electrode 4 through the dielectric tube 1. In Embodiment 1, a length of a fuse conductor is set to be 1mm. When a length is extremely short, for example, less than 0.1mm, heat will be extremely escaped from a fuse conductor to a fixed electrode at power supplying side or to a fixed electrode at voltage applying electrode side, therefore a fuse conductor is not melted easily due to a short circuit current, and after a short circuit current becomes zero, the melted part is fixed again, and consequently, a problem, that is, a fuse conductor part is electrically connected, will occur. On the other hand, when a length of a fuse conductor is longer, an amount of generation heat in a fuse conductor is increased, and circuit loss is increased, therefore an ozone generation ratio will be decreased. Further, a temperature of a fuse conductor in operation will be increased, therefore, when a device is operated for a long period, disconnection in a fuse conductor due to material deterioration is generated easily. Consequently, regarding a length of a fuse conductor, in a case where SUS304 or SUS316 is used, a length of 0.1 to 2mm is most appropriate. When a fuse conductor having a length of 0.1 to 2mm is used and a short circuit current is flown, in a case of a short circuit current 10A, a fuse conductor is fused at 5 to 0.15ms and in a case of a short circuit current 100A, a fuse conductor is fused at 50 to 1.5ps.

A plate surface of the fixed electrode 3 and that of the fixed electrode 4 are fixed to an inner surface of the dielectric tube 1 via the fixing material 3 and the fixing material 4, individually, and from the fixed electrode 3 and the fixed electrode 4 to the dielectric tube 1, heat is radiated due to heat conduction in the entire surface which is fixed. Heat is radiated from surface, therefore, an amount of radiation can be increased. Further, in order not to prevent radiation from the fixed electrode 3 and the fixed electrode 4 to the dielectric tube 1, as the fixing material 3a and the fixing material 4a, an adhesive having excellent heat conduction is used. Concretely, an epoxy based excellent heat conduction adhesive or a conductive adhesive may be used. Further, when non-organic based adhesives or general adhesives is used, by applying them thinly, heat conduction can be increased. When a current in normal operation flows in the current blocking element 7, heat which is generated in the heat conductor 5a is immediately conducted to the dielectric tube 1 through the fixed electrode 3 at power supplying side and the fixing material 3a. Heat which is conducted to the dielectric tube 1 is expanded widely in the dielectric tube 1, and by heat transfer, heat is radiated to the surrounding gas. In a case where a glass tube is used as the dielectric tube 1, when a thickness of the glass tube is 1 to 3mm, heat is conducted in the dielectric tube immediately, therefore, heat is conducted widely and immediately in the dielectric tube 1. Regarding heat transfer, when a surface area is larger, performance for conducting heat is more excellent, therefore, by making the above mentioned configuration, temperature increase of the fuse conductor 5a can be suppressed. As a result, material deterioration due to temperature increase can be suppressed, therefore disconnection of the fuse conductor 5a due to material deterioration can be suppressed, consequently, the current blocking element 7 which is highly reliable can be provided. In the same way as the above mentioned, heat which is generated in the fuse conductor 5c is conducted immediately to the dielectric tube 1 through the fixed electrode 4 at voltage applying electrode side and the fixing material 4a, and heat is radiated. Further, regarding a thickness of an adhesive which is used as the fixing material 3a and the fixing material 4a, when a thickness of an adhesive is thinner, heat is conducted to the dielectric tube more easily.

Further, an objective of the fixed electrode 3 at power supplying side and the fixed electrode 4 at voltage applying electrode side is to transmit efficiently heat which is generated in the fuse conductor 5a and the fuse conductor 5c to the dielectric tube 1 by fixing with surface, therefore, when a size is too small, a temperature is increased, however, it is not necessary to make a size larger. This is because such that even when an area of surface where the dielectric tube 1 is fixed is small, due to a function of the fixing material 3a and the fixing material 4a which have excellent head conduction, heat which is generated in the fuse conductor can be transmitted efficiently to the dielectric tube 1. In Embodiment 1, regarding a size of the fixed electrode 3 at power supplying side and that of the fixed electrode 4 at voltage applying electrode side, a thickness is 0.01 to 0.05mm, a width is 1.5 to 6mm, and a length is 2 to 16mm. Regarding the above mentioned fixed electrodes, a surface which is formed to have a width 1.5 to 6mm and a length 2 to 16mm is fixed to an inner surface of the dielectric tube 1 which constitutes a base of a current blocking element by a fixing material.

It is necessary to make a cross-sectional area of the intermediate conductor 5b larger than that of the fuse conductor 5a and that of the fuse conductor 5c for suppressing Joule heating by a current in normal operation. On the other hand, when a cross-sectional area of the intermediate conductor 5b is too large, weight of the intermediate conductor 5b is applied to the fuse conductor 5a and the fuse conductor 5c which are provided at both sides of the intermediate conductor 5b, and mechanical stress which is applied to the fuse conductors becomes large, therefore disconnection of fuse conductors due to mechanical stress is generated easily. From the above mentioned view point, regarding a cross-sectional size of the intermediate conductor 5b, a thickness is 0.01 to 0.05mm and a width is 0.5 to 5mm. A length of the intermediate conductor 5b is set to be 4 to 8mm for securing an insulation size. Further, a thickness of the fixing material 3a and the fixing material 4a is set to be 0.01 to 0.5mm and $L_4$ size in FIG.3 is set to be 1 to 5mm. By making the above mentioned configuration, an insulation size shown in FIG.4 will be the following in Embodiment 1.

$$\text{(a) } L_1 = (4 \text{ to } 8mm) + 2 \times (0.1 \text{ to } 2mm) = 4.2 \text{ to } 12 \text{ mm}$$

$$\text{(b) } L_2+L_3 = ((\text{inner diameter of the dielectric tube 1})-(0.01 \text{ to } 0.05mm) - (0.01 \text{ to } 0.05mm)) \times 2$$

$$= (\text{inner diameter of the dielectric tube 1}) \times 2 - (0.04 \text{ to } 0.2mm)$$

$$\text{(c) } L_3+L_4 = ((\text{inner diameter of the dielectric tube 1})-(0.01 \text{ to } 0.05mm) - (0.01 \text{ to } 0.05mm)) + (1 \text{ to } 5mm)$$

$$= (\text{inner diameter of the dielectric tube 1}) + (1 \text{ to } 4.9mm)$$

In a case where an inner diameter of a glass tube which constitutes the dielectric tube 1 is 4mm or more, an insulation size of the (a) to (c) is 4mm or more which is necessary insulation size, therefore insulation can be secured. Regarding a length of the intermediate conductor 5b, in order to satisfy the above mentioned, when a length is shorter, generation heat in the intermediate conductor 5b can be suppressed more.

In conventional example shown in FIG.12, when a current blocking element is designed to have two fuse conductors, before a current blocking element functions, the configuration is FIG.13A, and after a current blocking element functions, the configuration is FIG. 13B. After a current blocking element functions, an insulation distance is secured at $(L_1+L_2)$, however, when it is compared to FIG.4 in Embodiment 1, in conventional example, an electrode 33 and an electrode 34 are disposed in the center of the dielectric tube 1, therefore, in a case of a glass tube having the same diameter, a dropping distance becomes half, and an insulation distance $(L_1+L_2)$ becomes short. Consequently, in order to secure necessary insulation distance, it is necessary to secure enough distance between the electrode 33 and the electrode 34. Further, as can be understood from the position relationship in FIG. 13A and FIG.13B, sum of a length of two fuse conductors 36 is a dominant size which determines an insulation distance $(L_1+L_2)$. Consequently, in order to secure an insulation distance 7mm or more, it is necessary to secure lengths of the fuse conductors 36 to be 3.5mm or more, individually, and when it is compared to a size of a fuse conductor in Embodiment 1, that is, 1mm, it is 3.5 times longer. As a result, in Embodiment 1, a value of resistance of a fuse conductor is decreased to be 1/3.5=28.6%, and fuse conductor generating heat is decreased to be 28.6%.

As above mentioned, by suppressing heat generation of a fuse conductor, and by fixing a plate surface of a fixed electrode to an inner surface of a dielectric tube, heat radiation can be improved, therefore a temperature increase of a fuse conductor, an intermediate conductor and a fixed electrode in normal operation is decreased, as a result, thermal stress which is applied to a fuse conductor is decreased, and disconnection of a fuse conductor due to thermal stress in normal operation will not be generated.

Further, the configuration is made such that when a fuse conductor is melted, the intermediate conductor 5b will be dropped to a bottom of the dielectric tube 1, therefore, it is easier to secure an insulation distance. In order to secure an insulation distance, the current blocking element 7 may be attached for a fixed electrode to be fixed at a position where in a case where a fuse conductor is melted, a distance between a fixed electrode and the intermediate conductor 5b after the intermediate conductor 5b is dropped due to gravity is larger than that before the intermediate conductor 5b is dropped. In a case where the dielectric tube 1 is installed for a tube axis direction of the dielectric tube to be horizontal, in order to make the intermediate conductor 5b drop to a bottom of the dielectric tube 1, the current blocking element 7 may be installed so as for a normal vector which is from at least a part of a surface of the dielectric tube 1 at which a fixed electrode is fixed to a side where a fixed electrode is fixed has a component of gravity direction. Further, in a case where the dielectric tube 1 is cylindrical shape and is installed so as for a tube axis direction to be horizontal direction, above mentioned condition is for a fixed electrode to be fixed at any position of upper side half of an inner surface of the dielectric tube.

Heat generation of a fuse conductor in normal operation is suppressed and heat dissipation is improved, therefore, a size of a fixed electrode can be decreased and the configuration is such that the intermediate conductor 5b is dropped to a bottom of the dielectric tube 1 while the fuse conductor is fused, consequently, an insulation distance can be secured easily. Therefore, even a size of tube diameter of a glass tube is decreased, a temperature increase of a fuse conductor in normal operation can be suppressed, and an insulation function can be secured after a fuse conductor is fused. As a result, a size of a tube diameter of the dielectric tube 1 can be decreased, loading of the dielectric tubes 1 with high density to a container of a body of an ozone generation device can be performed, and an ozone generating device which is compact can be provided at a lower cost.

Further, heat generation of a fuse conductor in normal operation is decreased, therefore, loss of electric circuit when an ozone is generated is decreased, and therefore, an ozone generation efficiency is improved. Further, heat generation of a fuse conductor is decreased, a gas temperature increase when a material gas is introduced from a material gas inlet 17 to the discharge gap 25 is decreased, therefore a temperature increase at an inlet part of a discharge gap part is suppressed, and therefore an ozone generation efficiency is improved.

In the above mentioned, a case in which the current blocking element 7 is attached to upper part of inner part of a dielectric is shown, however, by attaching the current blocking element 7 to a position which is upper half inside a dielectric, an intermediate conductor will be dropped, an insulation distance can be made large, and an effect can be obtained.

Further, a case in which between the fixed electrode 4 at voltage applying electrode side and the voltage applying electrode 2 is connected by the electrical connecting member 9 is shown, however, the electrical connecting member 9 may be omitted and the fixed electrode 4 at voltage applying electrode side may be directly electrically connected on the voltage applying electrode 2.

Further, in the above mentioned, the current blocking element 7 is attached to a position which is upper half of the dielectric tube 1, however, when the current blocking element 7 is attached to a position which is lower half of the dielectric tube 1, an insulation distance after a fuse conductor is melted and evaporated becomes shorter, however, there is an effect such that heat generation of a conductor in normal operation can be dissipated from large surface of the dielectric tube 1 via the fixed electrode 3 at power supplying side and the fixed electrode 4 at voltage applying electrode side which are fixed to the dielectric tube 1 to surrounding gas due to heat transfer. Consequently, in a case where an operation voltage of an ozone generation device may be low and insulation distance may be low, the current blocking element 7 which has excellent cooling performance can be realized.

Embodiment 2

FIG.5 is a cross-sectional view showing a principal part of a dielectric tube 1 in Embodiment 2 of this disclosure. In Embodiment 1, a case in which one fusing element 5 is used is described, however, when two fusing elements per one current blocking element 7 are used, reliability of a device can be improved. Concretely, as shown in FIG.5, at both sides of an intermediate conductor 51b, a fuse conductor 51a and a fuse conductor 51c are connected so as to constitute a fusing element 51, and at both sides of an intermediate conductor 52b, a fuse conductor 52a and a fuse conductor 52c are connected so as to constitute a fusing element 52. Between a fixed electrode 3 at power supplying side and a fixed electrode 4 at voltage applying electrode side, an intermediate fixed electrode 6 is disposed, between the fixed electrode 3 at power supplying side and the intermediate fixed electrode 6, the fusing element 51 is connected, and between the fixed electrode 4 at voltage applying electrode side and the intermediate fixed electrode 6, the fusing element 52 is connected. The intermediate fixed electrode 6 is fixed to a dielectric tube 1 by a fixing material 6a which has excellent heat conductivity. The fixed electrode 3 at power supplying side, the fusing element 51, the intermediate fixed electrode 6, the fusing element 52, the fixed electrode 4 at voltage supplying electrode side and a part of the dielectric tube 1 where the above mentioned fixed electrodes are fixed constitute a current blocking element 7.

Heat which is generated in the fuse conductor 51a by a current which flows in the dielectric tube 1 in operation is conducted to the dielectric tube 1 through the fixed electrode 3 at power supplying side and the fixing material 3a, heat which is generated in the fuse conductor 51c and the fuse conductor 52a is conducted to the dielectric tube 1 through the intermediate fixed electrode 6 and the fixing material 6a, heat which is generated in the fuse conductor 52c is conducted to the dielectric tube 1 through the fixed electrode 4 at voltage applying electrode side and the fixing material 4a, and the heat is efficiently radiated from a wide surface of the dielectric tube 1 by heat transfer to surrounding gas.

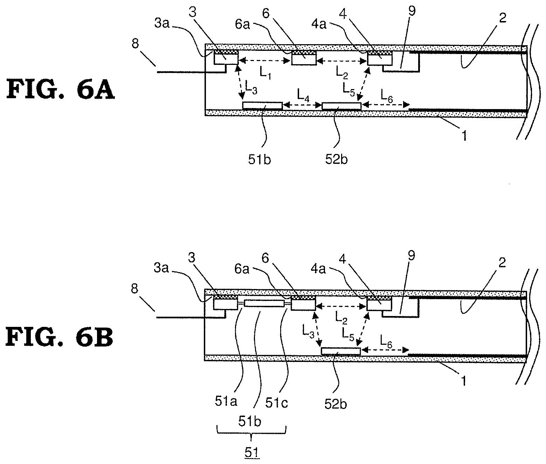

When a short circuit current flows in the current blocking element 7, the fuse conductors 51a, 51c, 52a and 52c are fused, and as shown in FIG.6A, the intermediate conductors 51b and 52b drop to a bottom inside the dielectric tube 1.

As will be described in the following, in some cases, a fusing element operates abnormally, therefore, when the current blocking element 7 is constituted by two fusing elements, reliability can be improved.

(1) As a width of a fuse conductor is small, due to variation of manufactured size, in a case where a short circuit current is small, a fuse conductor may not be fused.

(2) In a case where a fuse conductor or a part of an intermediate conductor is melted and when the intermediate conductor is close to a dielectric, the fuse conductor or a part of an intermediate conductor may be welded to the dielectric. In the above mentioned case, an intermediate conductor will not drop down, therefore an insulation distance is short and in a case where a voltage is applied again, short circuit will be occurred again. In a case where one of two fusing elements does not function, in order to make the current blocking element function, it is preferable for the configuration of the fusing element 51 and that of the fusing element 52 is matched to that of the fusing element 5 in Embodiment 1.

FIG.6A shows the state in a case where both of the fusing element 51 and the fusing element 52 drop. An insulation distance will be as follows.

   (a) An insulation distance between the fixed electrode 3 at power supplying side and the fixed electrode 4 at voltage applying electrode side = $L_1 + L_2$
   (b) An insulation distance between the fixed electrode 3 at power supplying side and the fixed electrode 4 at voltage applying side via the intermediate conductor 51b, 52b = $L_3 + L_4 + L_5$
   (c) An insulation distance between the fixed electrode 3 at power supplying side and the voltage applying electrode 2 via the intermediate conductor 51b, 52b = $L_3 + L_4 + L_6$

When the configuration of the fusing element 51 and that of the fusing element 52 are matched to that of the fusing element 5 in Embodiment 1, an insulation distance will be 1.5 to 2 times longer than that of a case in Embodiment 1, therefore, an insulation function can be sufficiently performed.
FIG.6B shows the state in a case where the fusing element does not function normally, only the fusing element 52 functions normally and only the fusing element 52 drops. When the configuration of the fusing element 51 and that of the fusing element 52 are matched to that of the fusing element 5 in Embodiment 1, an insulation distance in this case will be same as that in Embodiment 1. By configuring as above mentioned, in a case where a short circuit current flows, even when one fusing element, that is, the fusing element 51 does not function normally, other fusing element, that is, the fusing element 52 functions normally, therefore, an insulation distance can be secured only by the fusing element at one side, consequently, reliability of short circuit protection function can be improved. In the above mentioned, a case in which two fusing elements are used is described, however, when the number of fusing elements are increased more, reliability of short circuit protection function can be improved further.
Further, in the Embodiment, it is preferable such that the configuration of the fusing element 51 and that of the fusing element 52 are matched to that of the fusing element 5 in Embodiment 1, however, when it is designed to satisfy necessary insulation distance (4mm or more) by an insulation distance which is made by dropping of a plurality of fusing elements, the same effect can be realized. Regarding concrete design, with regard to $L_1$, $L_2$, $L_3$, $L_4$, $L_5$ and $L_6$ in FIG.6A, it is acceptable for all of following (a), (b) and (c) to be 4mm or more.
   (a) An insulation distance between the fixed electrode 3 at power supplying side and the fixed electrode 4 at voltage applying electrode side = $L_1 + L_2$
   (b) An insulation distance between the fixed electrode 3 at power supplying side and the fixed electrode 4 at voltage applying electrode side via the intermediate conductor 51b, 52b = $L_3 + L_4 + L_5$
   (c) An insulation distance between the fixed electrode 3 at power supplying side and the voltage applying electrode 2 via the intermediate conductor 51b, 52b = $L_3 + L_4 + L_6$

Embodiment 3

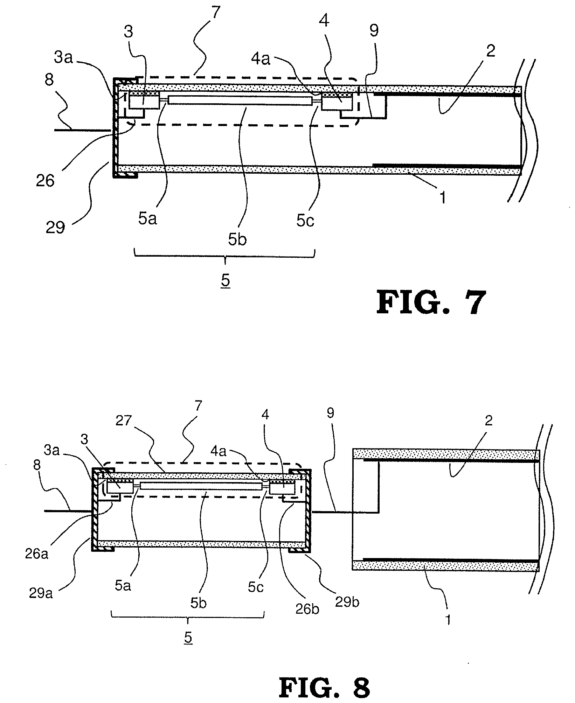

FIG.7 is a cross-sectional view showing a principal part of a dielectric tube 1 of an ozone generation device in Embodiment 3 of this disclosure. In Embodiment 1, an edge part of the dielectric tube 1 whose side where power is applied by a power applying member 8 is opened, however, as shown in FIG.7, a metallic cap 29 is attached to an open part of the dielectric tube 1 and between a fixed electrode 3 at power supplying side and the cap 29 is electrically connected by a connecting conductor 26, and the power supplying member 8 is electrically connected to the cap 29. When a short circuit current flows in a current blocking element 7, in some cases, a fuse conductor 5a and a fuse conductor 5c are melted and scattered, and an intermediate conductor 5b is scattered by arc discharge and escaped outside from an open part of the dielectric tube 1, and they are attached to a surface of other dielectric and electrical insulation can not be maintained. By attaching the cap 29, the fuse conductor 5a, the fuse conductor 5c and the intermediate conductor 5b will not be scattered outside a dielectric, therefore reliability of an ozone generation device can be improved. Regarding fixing of the cap 29 to the dielectric tube 1, any method such as caulking of cap 29, applying an inorganic adhesive to inside a cap, etc. is acceptable.

Embodiment 4

FIG.8 is an enlarged cross-sectional view showing the configuration of a current blocking element which is provided at an ozone generation device in an Embodiment 4, which is not covered by the claimed invention. In Embodiment 1, a case in which a fusing element is attached to an inner surface of a dielectric tube 1, however, as shown in FIG.8, it may be configured such that a fusing element 5 is attached to roughly upper side of an inner surface of a dielectric member 27 which has a cylindrical shape, at openings which are provided at both sides of the dielectric member 27, a metallic cap 29a and a metallic cap 29b are attached, a fixed electrode 3 at power supplying side and the cap 29a are electrically connected by a connecting conductor 26a, a fixed electrode 4 at voltage supplying electrode side and the cap 29b are electrically connected by a connecting conductor 26b, and a current blocking element 7 is constituted independently from the dielectric tube 1. In this case, a part of the dielectric member 27 which has a cylindrical shape constitutes a base of the current blocking element 7. According to a current blocking element in Embodiment 4, the current blocking element 7 can be manufactured at a manufacturing process which is different from that of the dielectric tube 1 and the voltage applying electrode 2, therefore a fuse manufacturing process can be made easier and manufacturing cost can be decreased.

In the above mentioned, a method for installing the dielectric member 27 which constitutes a base of the current blocking element 7 outside the dielectric tube 1 is described, however, the dielectric member 27 which constitutes a base of the current blocking element 7 may be disposed inside the dielectric tube 1. Further, among caps which are provided at both ends, one and both of them may be omitted.

Further, in FIG.8, the dielectric member 27 has a cylindrical shape, however, the dielectric member 27 may have different shape, for example, the dielectric member 27 is formed to be a dielectric plate which is made of glass or ceramic, and the plate shaped dielectric member 27 is used as a base so as to constitutes the current blocking element 7. In the above mentioned case, same effect can be realized. Further, when the above mentioned structure is attached to inside the dielectric tube 1, same effect can be realized.

Embodiment 5

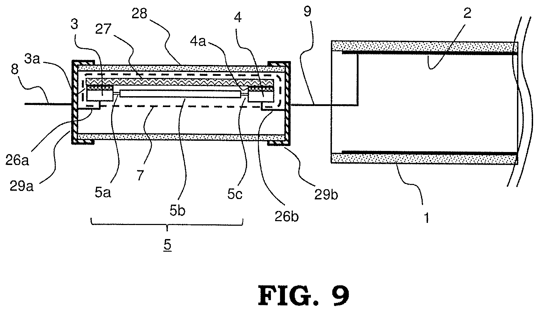

FIG.9 is an enlarged cross-sectional view showing the configuration of a current blocking element which is provided at an ozone generation device in an Embodiment 5, which is not covered by the claimed invention. As shown in FIG.9, a current blocking element 7 which is constituted to have a plate shaped dielectric member 27 as a base may be disposed inside another second dielectric member 28 having a tubular shape. The dielectric member 27 which constitutes a base of the current blocking element 7 is fixed to the second dielectric member 28 by a method which is not shown in FIG. At opening parts which are provided at both sides of the dielectric member 28, a metallic cap 29a and a metallic cap 29b are attached to, between a fixed electrode 3 at power supplying side and the cap 29a is electrically connected by a connecting conductor 26b, and between a fixed electrode 4 at voltage applying electrode side and the cap 29b is electrically connected by a connecting conductor 26b. Heat which is generated in a fuse conductor 5a and a fuse conductor 5b is dissipated from the dielectric member 27 via the fixed electrode 3 at power supplying side and the fixed electrode 4 at voltage applying electrode side, and once temperature of gas inside the second dielectric member 28 having a tubular shape is raised, and the heat is dissipated from a surface of the second dielectric member 28 to outside gas by heat transfer. The dissipated heat is indirection, therefore, dissipation ratio becomes worse in comparison with Embodiments 1 to 4, however, the current blocking element 7 can be manufactured in a manufacturing process which is different from that of the dielectric tube 1, the voltage applying electrode 2 and the second dielectric member 28 having a tubular shape, consequently, a fuse manufacturing process can be made easier and manufacturing cost can be decreased.

In the Embodiment, a method for installing the second dielectric member 28 outside the dielectric tube 1 is described, however, the second dielectric member 28 may be disposed inside the dielectric tube 1. Further, among caps which are provided at both sides, one and both of them may be omitted.

Further, regarding a material of a fuse conductor, even when a fuse conductor having a material other than stainless steel (SUS304) is manufactured to have designed size, the same effect can be realized. However, in a case where it is considered such that a fuse conductor is easily chemically reacted to oxygen gas, NOx gas which is generated by discharge and a fuse conductor is deteriorated for a long period, by attaching the cap 29, the same effect can be realized.

In Embodiments 1 to 4, an ozone generation device in which a discharge tube having the electrode configuration in which the voltage applying electrode 2 is disposed inside the dielectric tube 1 is described, however, as a discharge tube of an ozone generation device by silent discharge, a discharge tube having the electrode configuration in which a dielectric made of enamel covers the surroundings of metallic voltage applying electrode may exist.

Further, the configuration of a discharge tube in which an inner surface of a ground metallic electrode is coated with a dielectric, a discharge gap is formed inside the dielectric coating and a metallic voltage applying electrode is disposed may exist.

Embodiment 6

FIG.10A and FIG.10B are plan views showing the configuration of a metallic member 100 where a current flows of a current blocking element 7 in Embodiment 6 of this disclosure in which a base of a dielectric and a fixing material are eliminated. The metallic member 100 can be applied to a metallic member of a current blocking element in Embodiments 1 to 5. In Embodiments 1 to 5, whole of a metallic member where a current flows can be manufactured by etching a metallic plate having a thin thickness, that is, a metallic foil to form integrally. As above mentioned, by manufacturing a current blocking element by etching whole of a metallic member to form integrally, cost for manufacturing a current blocking element can be decreased drastically, further, a small sectional shape of a fuse conductor can be processed precisely, therefore variation of performance of a current blocking element can be suppressed, as a result, an ozone generation device having high reliability can be provided. FIG.10A is a plan view showing the configuration having one fusing element 5, and shows the configuration which is produced by etching whole of a metallic member in which a fixed electrode 3 at power supplying side, a fusing element 5 (a fuse conductor 5a, an intermediate conductor 5b, a fuse conductor 5c) and a fixed electrode 4 at voltage applying electrode side are connected in this order to form integrally. Further, FIG.10B is a plan view showing the configuration having two fusing elements, and shows the configuration which is produced by etching whole of a metallic member in which a fixed electrode 3 at power supplying side, a fusing element 51 (a fuse conductor 51a, an intermediate conductor 51b, a fuse conductor 51c), a fusing element 52 (a fuse conductor 52a, an intermediate conductor 52b, a fuse conductor 52c) and a fixed electrode 4 at voltage applying electrode side are connected in this order to form integrally.

Especially, when stainless steel (SUS304, etc.) is used as a material, cost of material is comparably cheap, and even when a material having a thin thickness such as 0.15mm is used, handling at manufacturing can be performed. Fusing performance is determined by sectional area of a fuse conductor, therefore, when a thickness of a material is thinner, a necessary width of a fuse conductor is wider, consequently, processing can be performed precisely. For example, in a case of SUS304 material having a thickness of 0.02mm, a width of a fuse conductor is 0.15mm, and by etching process, a conductor width can be processed precisely. When a silver material which is often used for a fuse is used, a resistivity of silver is low, therefore when a fuse conductor having the same thickness of 0.02mm is designed, a fuse conductor width is 0.006mm, the fuse conductor can not be processed precisely, therefore, it is necessary to apply microfabrication for a semiconductor, as a result, process cost will be increased drastically. From the above mentioned point of view, in a case where a current blocking element of an ozone generation device is manufactured by etching process whose manufacturing cost is cheap, a metallic material having a resistivity which is close to that of stainless steel ($70\mu\Omega\cdot$cm) is appropriate. A fuse conductor is increased in temperature due to current conduction and is deteriorated by oxidizing with oxygen gas, therefore a material which is not deteriorated easily, such as stainless steel, is preferable for improving a reliability of a current blocking element.

In FIG.10A and FIG.10B. for example, in a case where a stainless steel (SUS304, etc.) having a thickness of 0.02mm is used, regarding a size of the fixed electrode 3 at power supplying side, the fixed electrode 4 at voltage applying electrode side, the intermediate fixed electrode 6, for example, a width is 1.5 to 6mm, a length is 2 to 16mm. Further, regarding a size of an intermediate conductor 5b, an intermediate conductor 51b and an intermediate conductor 52b, for example, a width is 0.5 to 5mm and a length is 3 to 8mm. By fixing a surface of a fixed electrode, having a width 1.5 to 6mm and a length of 2 to 16mm which is manufactured by using a metallic member which is made of stainless foil which is processed by etching to have the above mentioned size, on a base of a dielectric by a fixing material, a current blocking element is constituted. As above mentioned, by using a metallic member which is manufactured by processing by etching a stainless foil, a current blocking element which has small variation of performance and high reliability can be provided.

Embodiment 7

In Embodiment 5, which is not covered by the claimed invention, in a case where a current blocking element 7, which is constituted by a transparent glass as a second dielectric member 28, functions, it can be confirmed visually such that an intermediate conductor 5b drops to a bottom inside the second dielectric member 28. After an ozone generation device is used for a long period, when a body container of an ozone generation 12 is opened so as to inspect inside the device, a fuse part of the second dielectric member 28 is confirmed visually, and when an intermediate conductor drops, we can confirm such that the current blocking element 7 functions. When inside of the second dielectric member 28 can not see, it is necessary to confirm whether the current blocking element 7 functions or not by measuring a resistive value between the cap 29a and the cap 29b, however, when the second dielectric member 28 is constituted by a transparent glass, we can confirm the operation of the current blocking element 7 visually, that is, work is easier. The dielectric tube 1 to which a fuse which functions is attached is broken down, therefore, it is necessary to replace the dielectric tube during maintenance, therefore, the dielectric tube 1, the voltage applying electrode 2 and the current blocking element 7 are taken out to replace with new ones. As above mentioned, when the current blocking element 7 in Embodiment 7 is used, there is an effect such that maintenance of an ozone generation device can be performed easily.

Further, in addition to the second dielectric member 28 in Embodiment 5, when the dielectric tube in Embodiment 1, Embodiment 2 and Embodiment 3, the dielectric member 27 in the Embodiment 4 are constituted by a transparent glass tube, dropping of an intermediate conductor can be confirmed visually, therefore the same effect can be realized.

Embodiment 8

In Embodiments 1 to 7, a case in which a discharge tube is installed in a horizontal direction is described, however, in a case where a discharge tube is installed vertically, that is an axial direction of a discharge tube is to be the direction of gravity, the current blocking element 7 may be attached toward a vertical direction. Further, in a case where a discharge tube is constituted by a dielectric tube in which one side is opened as shown in FIG.1, an opening part is disposed at an upper side of vertical direction of a dielectric tube, and a current blocking element may be attached to the vicinity of the opening part.

[Description of Reference Signs]

1 dielectric tube
2 voltage applying electrode
3 fixed electrode at power supplying side
4 fixed electrode at voltage applying electrode side
3a, 4a, 6a fixing material
5, 51, 54 fusing element
5a, 5c, 51a, 51c, 52a, 52c fuse conductor
5b, 51b, 52b intermediate conductor
6 intermediate fixed electrode
7 current blocking element
11 ground metal electrode
16 AC power source
100 metallic member

**Claims**

1. An ozone generation device comprising a plurality of discharge tubes in which each discharge tube is constituted by a dielectric tube (1) having a voltage applying electrode (2) inside the dielectric tube (1) and a ground metal electrode (11) which is arranged so as to have a discharge gap between an inner surface of the ground metal electrode (11) and an outer surface of the dielectric tube (1) and

   having a configuration in which gas containing oxygen is flown in the discharge gap, by applying an AC voltage from an AC power source (16) to between the voltage applying electrode (2) and the ground metal electrode (11), and the gas containing oxygen is discharged to be an ozonized gas,
   wherein each of a plurality of the discharge tubes (1) comprises a current blocking element (7) connected between the AC power source (16) and the voltage applying electrode (2), wherein each current blocking element (7) has a configuration such that at each side of both ends of a fusing element (5) having a configuration such that a fuse conductor (5a, 5c) which is melted by overcurrent is connected to both sides of an intermediate conductor (5b), individually, a fixed electrode (3, 4) having plate shape is connected,
   **characterized in that** a plate surface of each fixed electrode (3, 4) is fixed to an inner surface of the dielectric tube (1) by a fixing material (3a, 4a), wherein the fixed electrode (3, 4) is fixed to an inner surface of the dielectric tube (1) where the voltage applying electrode (2) is not arranged.

2. The ozone generation device according to claim 1, wherein a metallic member (100) which is a connection body of the fixed electrodes (3, 4) and the fusing element (5) among the current blocking element (7) is formed by one metallic plate.

3. The ozone generation device according to claim 1 or 2, wherein the current blocking element (7) is attached so as for the fixed electrode (3, 4) to be fixed at a position where in a case where the fuse conductor (5a, 5c) is melted, a distance between the fixed electrode (3, 4) and the intermediate conductor (5b) after the intermediate conductor (5b) is dropped due to gravity is larger than a distance between the fixed electrode (3, 4) and the intermediate conductor (5b) before the intermediate conductor (5b) is dropped.

4. The ozone generation device according to claim 3, wherein the dielectric tube (1) is installed so as for an axial direction of the dielectric tube (1) is to be horizontal direction and the current blocking element (7) is installed so as for a normal vector which is from at least one surface of the base at which the fixed electrode (3, 4) is fixed to a side where the fixed electrode (3, 4) is fixed has a component of gravity direction.

5. The ozone generation device according to claim 3, wherein the dielectric tube (1) is cylindrical and is installed so as for an axial direction is to be horizontal direction, and the fixed electrode (3, 4) is fixed to any position at an upper side half of an inner surface of the dielectric tube (1).

6. The ozone generation device according to claim 3, wherein the discharge tube is provided so as for an axial direction of the discharge tube to be gravity direction.

7. The ozone generation device according to any of claims 1 to 6, wherein in a case where break down of the discharge tube during operation is detected, the AC power source (16) is controlled such that after output is stopped for a predetermined period of time, output is started again.

8. The ozone generation device according to claim 7, wherein in a case where the AC power source (16) detects such that output voltage is lowered than a predetermined threshold value, the AC power source (16) judges such that the discharge tube is broken down.

9. The ozone generation device according to any of claims 1 to 8, wherein three or more of the fixed electrodes (3, 4, 6) are provided, and between the adjoining fixed electrodes (3, 4, 6), each of the fusing elements (51, 52) is connected.

10. The ozone generation device according to any of claims 1 to 9, wherein a metallic member (100) which is a connection body of the fixed electrodes (3, 4) and the fusing element (5) is formed by one metallic plate.

## Patentansprüche

1. Ozonerzeugungseinrichtung mit einer Mehrzahl von Entladeröhren, in denen jede Entladeröhre zusammengesetzt ist aus einem dielektrischen Rohr (1), das eine Spannungsbeaufschlagungselektrode (2) innerhalb des dielektrischen Rohrs (1) und eine Erdungsmetallelektrode (11) aufweist, die angeordnet ist, um eine Entladelücke zwischen einer Innenfläche der Erdungsmetallelektrode (11) und eine Außenfläche des dielektrischen Rohrs (1) aufzuweisen, und das eine Konfiguration aufweist, in der Gas, das Sauerstoff enthält, in die Entladelücke strömt, durch Beaufschlagen einer AC-Spannung von einer AC-Leistungsquelle (16) zu zwischen der Spannungsbeaufschlagungselektrode (2) und der Erdungsmetallelektrode (11), und wobei das Gas, das Sauerstoff enthält, entladen wird, um ozonisiertes Gas zu sein,

wobei jede eine Mehrzahl von Entladeröhren (1) ein Stromblockierungselement (7) aufweist, das zwischen der AC-Leistungsquelle (16) um die Spannungsbeaufschlagungselektrode (2) verbunden ist, wobei jedes Stromblockierungselement (7) eine Konfiguration derart aufweist, dass jede Seite von beiden Enden eines Sicherungselements (5), das eine Konfiguration derart aufweist, dass ein Sicherungsleiter (5a, 5c), der durch einen Überstrom geschmolzen wird, an beiden Seiten eines Zwischenleiters (5b) verbunden ist, individuell eine feste Elektrode (3, 4), die eine Plattenform aufweist, verbunden ist, **dadurch gekennzeichnet, dass** eine Plattenoberfläche von jeder festen Elektrode (3, 4) an einer Innenfläche des dielektrischen Rohrs (1) durch ein Befestigungsmaterial (3a, 4a) befestigt ist, wobei die befestigte Elektrode (3, 4) an einer Innenfläche des dielektrischen Rohrs (1) befestigt ist, wo die Spannungsbeaufschlagungselektrode (2) nicht angeordnet ist.

2. Ozonerzeugungseinrichtung nach Anspruch 1, wobei ein Metallelement (100), das einen Verbindungskörper der festen Elektroden (3, 4) und das Sicherungselement (5) unter dem Stromblockierungselement (7) ist, durch eine metallische Platte ausgebildet ist.

3. Ozonerzeugungseinrichtung nach Anspruch 1 oder 2, wobei das Stromblockierungselement (7) angebracht ist, damit die feste Elektrode (3, 4) an einer Position befestigt ist, wo in einem Fall, wo der Sicherungsleiter (5a, 5c) geschmolzen ist, eine Entfernung zwischen der festen Elektrode (3, 4) und dem Zwischenleiter (5b), nachdem der Zwischenleiter (5b) heruntergefallen ist aufgrund der Schwerkraft, größer ist als eine Entfernung zwischen der festen Elektrode (3, 4) und dem Zwischenleiter (5b), bevor der Zwischenleiter (5b) heruntergefallen ist.

4. Ozonerzeugungseinrichtung nach Anspruch 3, wobei das dielektrische Rohr (1) installiert ist, damit eine Axialrichtung des dielektrischen Rohrs (1) eine Horizontalrichtung ist und das Stromblockierungselement (7) installiert ist, damit ein Normalvektor, der von mindestens einer Oberfläche der Basis, an der die befestigte Elektrode (3, 4) befestigt ist, zu einer Seite, wo die befestigte Elektrode (3, 4) befestigt ist, eine Komponente der Schwerkraftrichtung aufweist.

5. Ozonerzeugungseinrichtung nach Anspruch 3, wobei das dielektrische Rohr (1) zylindrisch ist und installiert ist, damit eine Axialrichtung eine Horizontalrichtung ist und die befestigte Elektrode (3, 4) an irgendeiner Position an einer oberen Seitenhälfte einer Innenfläche des dielektrischen Rohrs (1) befestigt ist.

6. Ozonerzeugungseinrichtung nach Anspruch 3, wobei das Entladerohr bereitgestellt ist, damit eine Axialrichtung des Entladerohrs die Schwerkraftrichtung ist.

7. Ozonerzeugungseinrichtung nach einem der Ansprüche 1 bis 6, wobei in einem Fall, wo ein Ausfallen des Entladerohrs während des Betriebs detektiert ist, die AC-Leistungsquelle (16) derart gesteuert ist, dass, nachdem eine Ausgabe für eine vorbestimmte Zeitdauer gestoppt ist, die Ausgabe wieder gestartet wird.

8. Ozonerzeugungseinrichtung nach Anspruch 7, wobei in einem Fall, wo die AC-Leistungsquelle (16) derart detektiert, dass eine Ausgangsspannung derart abgesenkt ist, dass sie unter einer vorbestimmten Schwellwertspannung ist, die AC-Leistungsquelle (16) urteilt, dass das Entladerohr ausgefallen ist.

9. Ozonerzeugungseinrichtung nach einem der Ansprüche 1 bis 8, wobei drei oder mehr der befestigten Elektroden (3, 4, 6) bereitgestellt sind, und zwischen den aneinander liegenden befestigten Elektroden (3, 4, 6) jedes der Sicherungselemente (51, 52) verbunden ist.

10. Ozonerzeugungseinrichtung nach einem der Ansprüche 1 bis 9, wobei ein Metallelement (100), das ein Verbindungskörper der befestigten Elektroden (3, 4) und das Sicherungselement (5) ist, aus einer Metallplatte ausgebildet ist.

**Revendications**

1. Dispositif de génération d'ozone comprenant une pluralité de tubes de décharge chaque tube de décharge étant constitué par un tube diélectrique (1) ayant une électrode d'application de tension (2) à l'intérieur du tube diélectrique (1) et une électrode métallique de masse (11) qui est agencée de manière à avoir un espace de décharge entre une surface intérieure de l'électrode métallique de masse (11) et une surface extérieure du tube diélectrique (1) et

   ayant une configuration dans laquelle un gaz contenant de l'oxygène s'écoule dans l'espace de décharge, en appliquant une tension alternative depuis une source d'alimentation en courant alternatif (16) entre l'électrode d'application de tension (2) et l'électrode métallique de masse (11), et le gaz contenant de l'oxygène est déchargé pour être un gaz ozonisé,
   chacun d'une pluralité de tubes de décharge (1) comprenant un élément de blocage de courant (7) qui est connecté entre la source d'alimentation en courant alternatif (16) et l'électrode d'application de tension (2), chaque élément de blocage de courant (7) ayant une configuration telle qu'à chaque côté des deux extrémités d'un élément fusible (5) ayant une configuration telle qu'un conducteur fusible (5a, 5c) qui est fondu par une surintensité est connecté aux deux côtés d'un conducteur intermédiaire (5b), individuellement, une électrode fixe (3, 4) ayant une forme de plaque est connectée,
   **caractérisé en ce qu'**une surface de plaque de chaque électrode fixe (3, 4) est fixée à une surface intérieure du tube diélectrique (1) par un matériau de fixation (3a, 4a), l'électrode fixe (3, 4) étant fixée à une surface intérieure du tube diélectrique (1) où l'électrode d'application de tension (2) n'est pas agencée.

2. Dispositif de génération d'ozone selon la revendication 1, un élément métallique (100) qui est un corps de connexion des électrodes fixes (3, 4) et de l'élément fusible (5) parmi l'élément de blocage de courant (7) étant formé par une plaque métallique.

3. Dispositif de génération d'ozone selon la revendication 1 ou 2, l'élément de blocage de courant (7) étant fixé de manière à ce que l'électrode fixe (3, 4) soit fixée à une position où, dans un cas où le conducteur fusible (5a, 5c) est fondu, une distance entre l'électrode fixe (3, 4) et le conducteur intermédiaire (5b) après que le conducteur intermédiaire (5b) soit tombé en raison de la gravité est plus grande qu'une distance entre l'électrode fixe (3, 4) et le conducteur intermédiaire (5b) avant que le conducteur intermédiaire (5b) soit tombé.

4. Dispositif de génération d'ozone selon la revendication 3, le tube diélectrique (1) étant installé de telle sorte qu'une direction axiale du tube diélectrique (1) doit être une direction horizontale, et l'élément de blocage de courant (7) étant installé de telle sorte qu'un vecteur normal qui va d'au moins une surface de la base à laquelle l'électrode fixe (3, 4) est fixée à un côté où l'électrode fixe (3, 4) est fixée a une composante de direction de gravité.

5. Dispositif de génération d'ozone selon la revendication 3, le tube diélectrique (1) étant cylindrique et étant installé de telle sorte qu'une direction axiale doit être une direction horizontale, et l'électrode fixe (3, 4) étant fixée à une quelconque position au niveau d'une moitié latérale supérieure d'une surface interne du tube diélectrique (1).

6. Dispositif de génération d'ozone selon la revendication 3, le tube de décharge étant prévu de telle sorte qu'une direction axiale du tube de décharge soit une direction de gravité.

7. Dispositif de génération d'ozone selon l'une quelconque des revendications 1 à 6, dans un cas où une rupture du tube de décharge pendant le fonctionnement est détectée, la source d'alimentation en courant alternatif (16) étant commandée de telle sorte qu'après que la sortie soit arrêtée pendant une période de temps prédéterminée, la sortie est relancée.

8. Dispositif de génération d'ozone selon la revendication 7, dans un cas où la source d'alimentation en courant alternatif (16) détecte que la tension de sortie est inférieure à une valeur de seuil prédéterminée, la source d'alimentation en courant alternatif (16) jugeant que le tube de décharge est cassé.

9. Dispositif de génération d'ozone selon l'une quelconque des revendications 1 à 8, trois ou plus des électrodes fixes (3, 4, 6) étant prévues, et entre les électrodes fixes adjacentes (3, 4, 6), chacun des éléments fusibles (51, 52) étant connecté.

10. Dispositif de génération d'ozone selon l'une quelconque des revendications 1 à 9, un élément métallique (100) qui est un corps de connexion des électrodes fixes (3, 4) et de l'élément fusible (5) étant formé par une plaque métallique.

**FIG. 1**

**FIG. 2A**

CROSS-SECTIONAL VIEW IN LONGITUDINAL DIRECTION OF DIELECTRIC TUBE

**FIG. 2B**

CROSS-SECTIONAL VIEW IN LATERAL DIRECTION OF DIELECTRIC TUBE

FIG. 3

**FIG. 4**

**FIG. 5**

**FIG. 6A**

**FIG. 6B**

**FIG. 7**

**FIG. 8**

**FIG. 9**

**FIG. 10A**

**FIG. 10B**

**FIG. 11**

**FIG. 12**

**FIG. 13A**

**FIG. 13B**

**REFERENCES CITED IN THE DESCRIPTION**

**Patent documents cited in the description**

- WO 084181 A
- JP 2011243484 A
- JP H11353993 A
- WO 2015183805 A1
- EP 0621621 A2